(19) Europäisches Patentamt

European Patent Office

Office européen des brevets

(11) **EP 0 487 940 B1**

(12) **EUROPÄISCHE PATENTSCHRIFT**

(45) Veröffentlichungstag und Bekanntmachung des Hinweises auf die Patenterteilung:
**22.01.1997  Patentblatt 1997/04**

(51) Int Cl.6: **G01S 13/526**, G01S 7/02, G01S 13/53

(21) Anmeldenummer: **91118771.4**

(22) Anmeldetag: **04.11.1991**

(54) **Pulsdoppler-Radargerät**

Pulse doppler radar

Radar du type pulsdoppler

(84) Benannte Vertragsstaaten:
**DE FR GB IT**

(30) Priorität: **28.11.1990  DE 4037895**

(43) Veröffentlichungstag der Anmeldung:
**03.06.1992  Patentblatt 1992/23**

(73) Patentinhaber: **SIEMENS AKTIENGESELLSCHAFT**
**80333 München (DE)**

(72) Erfinder: **Ritter, Gerhard, Dipl.-Ing.**
**W 8911 Thaining (DE)**

(56) Entgegenhaltungen:
**US-A- 4 450 444          US-A- 4 622 552**

- **MICROWAVE JOURNAL Bd. 34, Nr. 5, Mai 1991, NORWOOD, MA, US Seiten 263 - 273 ALFONSO FARINA ET AL. 'Detection with High Resolution Radar: Great Promise, Big Challenge'**

**Beschreibung**

Die Erfindung bezieht sich auf ein Pulsdoppler-Radargerät gemäß dem Oberbegriff des Patentanspruchs 1.

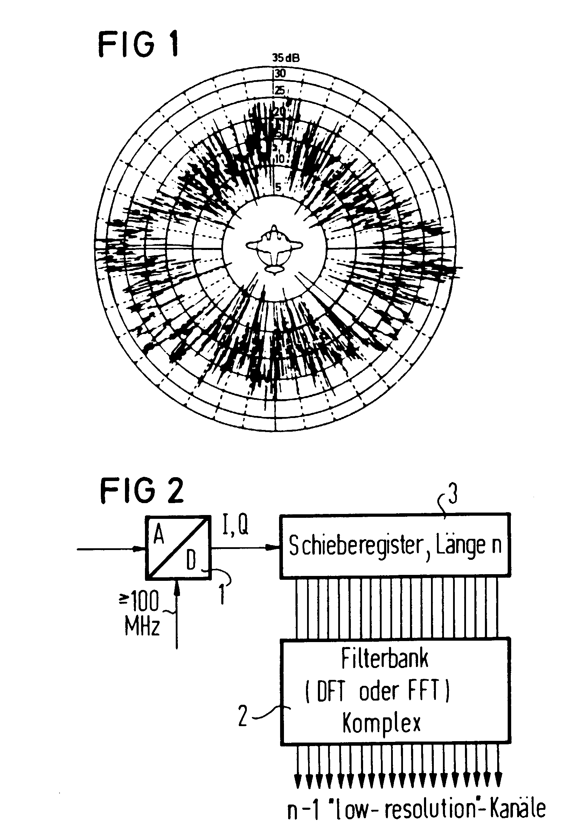

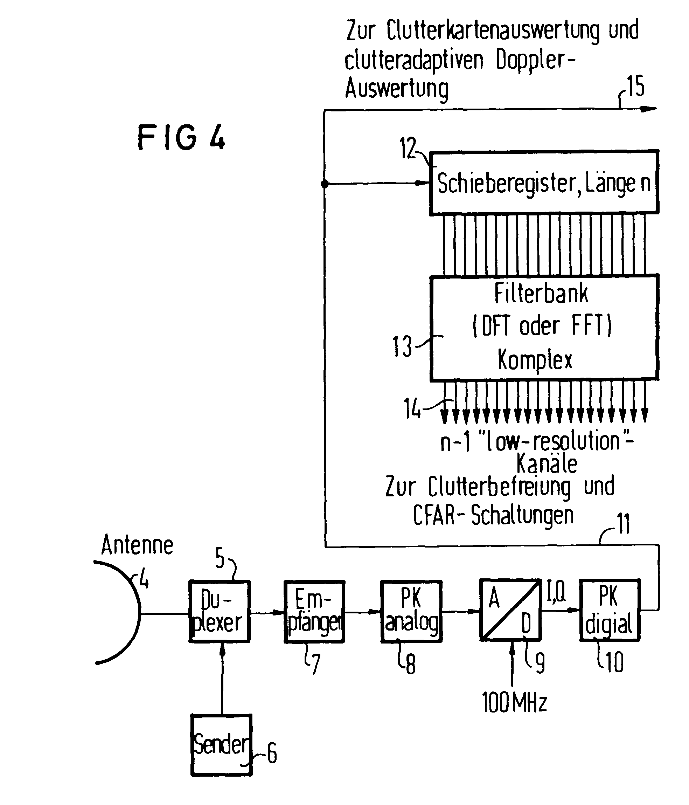

In der Radartechnik besitzen die Ziele häufig eine komplexe Struktur und sind in ihren Abmessungen meist groß gegenüber der Wellenlänge. Es ergibt sich daher meist ein kompliziertes Rückstreuverhalten, welches wiederum aus einer Summe von in sich komplexen Streuzentren besteht. Dies gilt z.B. für Flugkörper mit Rumpf, Tragflächen, Leitwerken, Luken usw.. In Fig. 1 ist der Reflexionsquerschnitt für ein Flugzeug dargestellt, wie es z.B. im Standardwerk von Merrill I. Skolnik: "Introduction to Radar Systems", 2. Edition, McGraw-Hill, New York, 1981, Seite 40 zu finden ist. Auf Grund der großen Abmessungen des Flugzeuges, verglichen mit der Wellenlänge von 10 cm, welche bei der Messung verwendet wurde, ergibt sich ein stark winkelabhängiges Rückstreuverhalten, meßtechnisch dargestellt als Reflexionsquerschnitt. Der aktuell für ein Radargerät wirksame Reflexionsquerschnitt kann, auch wegen des bei der Messung nicht bekannten Azimutwinkels, bisher noch nicht in geschlossener Form dargestellt werden. Darüber hinaus ist der Reflexionsquerschnitt stark frequenzabhängig.

Die Beschreibung dieses Verhaltens ist in der Radartechnik in statistischer Form üblich. Als Grundlage für die statistische Beschreibung des Verhaltens wird heute im Allgemeinen die Arbeit von Swerling P.: "Probability of detection for fluctuating targets", IRE Trans. IT-6, No. 2, April 1960 verwendet. Abhängig von der aktuellen Situation wird zwischen verschiedenen sogenannten Swerling-Fällen unterschieden. Die größte Bedeutung besitzt jedoch der sogenannte Swerling-Fall I, welcher das aktuelle Rückstreuverhalten eines komplexen Zieles in sehr guter Näherung in statistischer Form beschreibt. Im konkreten Fall kann dies bedeuten, daß auch ein Ziel mit einem großen mittleren Reflexionsquerschnitt aktuell mit einem sehr kleinen Reflexionsquerschnitt durch das Radargerät gesehen wird. Daraus können aktuell sehr geringe Entdeckungswahrscheinlichkeiten resultieren, selbst bei relativ "großen" Zielen.

Als eingeführte Technik gegen dieses Verhalten von komplexen Zielen wird der Betrieb des Radargerätes mit unterschiedlichen Betriebsfrequenzen während der Zielüberstreichzeit verwendet, da das Rückstreuverhalten sehr stark frequenzabhängig ist. Dies kann nacheinander mit mehreren Frequenzen erfolgen, was dann zwar einen relativ geringen Zusatzaufwand für die erforderliche Frequenzagilität bedeutet, jedoch mit Nachteilen für die Datenerneuerungsrate. Der Betrieb kann aber auch gleichzeitig mit mehreren Frequenzen ohne Nachteil für die Datenerneuerungsrate, jedoch auf Kosten des dann erforderlichen Hardwareaufwandes erfolgen, da praktisch mehrere Radargeräte simultan an einer gemeinsamen Antenne betrieben werden müssen.

Der erhöhte Hardware-Aufwand bei gleichzeitigem Betrieb mehrerer Radargeräte besitzt darüber hinaus Vorteile in bezug auf die Störfestigkeit, da ein Störer seine Störleistung quasi auf mehrere Radargeräte verteilen muß.

Ein "ideales" Radargerät würde nach dieser Betrachtungsweise aus einer größeren Anzahl von Radargeräten bestehen, welche an einer gemeinsamen Antenne betrieben werden. Bei einer großen Zahl von gleichzeitig verwendeten Betriebsfrequenzen ist zu erwarten, daß das Rückstreuverhalten im wesentlichen durch den mittleren Reflexionsquerschnitt eines Zieles gegeben ist, wenn die Messungen bei allen Frequenzen ausgewertet werden. Bei einzelnen Frequenzen können darüber hinaus die Maxima des Reflexionsquerschnittes vermessen werden.

Einer derartigen Lösung steht jedoch der erforderliche Hardware-Aufwand bisher im Wege.

Eine Maßnahme gegen absichtliche Störungen, insbesondere breitbandige Rauschsstörer, ist das sogenannte "look-before"-Verfahren. Bei diesem Verfahren wird zunächst mit Hilfe einer Spektralanalyse des verfügbaren Betriebsfrequenzbandes des Radargerätes der am wenigstens gestörte Kanal ausgesucht und anschließend das Radargerät in möglichst kurzer Zeit auf diese Frequenz abgestimmt.

Die Störleistung eines einzigen breitbandigen Rauschstörers, welcher das gesamte Radarband belegt, wird jedoch nicht nur auf dem direkten Weg sondern auch über z.T. viele Umwege empfangen. Damit überlagern sich am Eingang des Radarempfängers viele Einzelkomponenten, welche z.B. über die Nebenzipfel und insbesondere auch über die Hauptkeule der Radarantenne empfangen werden können. Die Reflexionen am Boden mit Gras-oder anderem Bewuchs, Bäumen und sonstigen Hindernissen unterliegen relativ schnellen Änderungen durch Bewegungen im Wind. Befindet sich der Störer an Bord eines Flugzeuges, so ergeben sich durch die Geschwindigkeit und Flugmanöver des Störflugzeuges schnelle Änderungen der Phasenbeziehungen der einzelnen Komponenten, welche sich am Radarempfänger überlagern. Hinzu kommt, daß im allgemeinen vom Einsatz mehrerer Störflugzeuge, neben anderen Störmaßnahmen, auszugehen ist.

Das Problem beim "look-before"-Verfahren besteht deshalb in den schnellen zeitlichen Veränderungen der Bedingungen am Empfängereingang. Diese zeitliche Dynamik ist abhängig vom Antennendiagramm des Radargerätes, von der Umgebung des Radargerätes, von der Windgeschwindigkeit, von der Zahl der Störflugzeuge, von den Antennendiagrammen der Störer (Ausleuchtung der Umgebung) und von der Art der sonstigen Störmaßnahmen.

Hinzu kommt, daß das "look-before"-Verfahren z.B. durch gezielte Gegenmaßnahmen relativ einfach wirkungslos gemacht werden kann. Die einfachste Möglichkeit besteht z.B. im Einsatz von unkoordiniert "blinkenden Störern". D. h. mehrere Störer werden mit geschickt gewählten Zeiten ein- und ausgeschaltet.

Die Auswahl der am wenigsten gestörten Frequenz wie beim "look-before"-Verfahren erscheint damit unter bestimmten Bedingungen ebenso wirkungslos wie der Einsatz von SLC-Verfahren (Side Lobe Canceller). Beide Verfahren greifen nur unter bestimmten Voraussetzungen, wobei zu klären ist, mit welcher statistischen Wahrscheinlichkeit die geeigneten Bedingungen unter realistischen Annahmen gegeben sind, unter denen diese Verfahren greifen. Aus einer derartigen Untersuchung läßt sich dann der statistische Gewinn dieser Maßnahmen ableiten.

Entgegen bisher üblichen Radar-Auslegungen, bei denen die, durch die Sendeimpulslänge gegebene, Auflösung in der gleichen Größenordnung wie die Ziele liegt oder Ziele wesentlich kleiner sind als die Auflösung, wird durch Kurzzeitimpuls-Radarsysteme (vgl. das bereits zitierte Buch von M. I. Skolnik: Seite 421 und Seiten 434 bis 435) die Auflösung soweit gesteigert, daß ein Ziel in einzelne Abstandszellen aufgelöst werden kann. Diese Abstandszellen bestehen im allgemeinen wiederum aus einer größeren Anzahl von Streuzentren.

Dies besitzt zunächst den Vorteil, daß die mittlere Clutterleistung pro Auflösungszelle reduziert wird. Dies gilt sowohl für Flächenclutter (Bodenclutter) als auch Volumenclutter (Echos von Regenwolken bzw. Chaff). Hinzu kommt, daß die Clutterleistung nicht mehr primär als statistische Größe zu betrachten ist, sondern daß die einzelnen Clutter-Streuzentren aufgelöst werden. Weiter entstehen durch Abschattungseffekte von niedrigen Hügeln, Sträuchern und Bäumen viele clutterfreie Entfernungstore, welche auch von niedrig fliegenden Objekten kaum als Deckung genützt werden können.

Radargeräte mit derartig hohen Auflösungen werden bisher noch nicht eingesetzt, da allgemein angenommen wird, daß dann die Zielenergie über mehrere Entfernungstore verteilt wird. Es gibt lediglich theoretische Arbeiten zu diesem Thema. Das Zusammenfassen dieser Zielenergie wird im Beitrag von Farina A., Scannapieco F., Vinelli F.: "Target detection and classification with very high resolution radar", Radar-Conference 1989, Paris, 24. - 28. April 1989 in inkohärenter Weise vorgeschlagen. Als eine Möglichkeit zur Klassifikation sieht er eine mehrdimensionale Korrelatorbank vor. Dies ist eine aufwendige Möglichkeit, da für eine Klassifizierung das vorgeschlagene Verfahren erwarten läßt, daß umfangreiche Datenbanken für alle Ziele, z.B. Flugkörper, unter allen Aspektwinkeln vorhanden sein müssen. Diese hohe Auflösung ist weniger gut geeignet für die Verarbeitung schneller Ziele wegen des Wanderns der Streuzentren durch die Abstandszellen von Impuls zu Impuls.

Der Erfindung liegt die Aufgabe zugrunde, mit vertretbarem Hardware-Aufwand ein Pulsdoppler-Radargerät zu schaffen, mit dem sich gleichzeitig eine Dekorrelation der Zielfluktuation, eine Dekorrelation von Multipath, Glint und Seaclutter, eine gute Dopplerbedeckung, eine hohe Datenerneuerungsrate und eine Verarbeitung nicht nur für langsame, sondern auch für schnelle Ziele erreichen läßt. Diese Aufgabe wird gemäß der Erfindung durch die im kennzeichnenden Teil des Patentanspruchs 1 angegebenen Merkmale gelöst.

Es wird dabei von der Erkenntnis ausgegangen, daß es für schnelle Ziele wesentlich geschickter ist, eine kohärente Zusammenfassung der einzelnen Abstandszellen des Zieles vorzunehmen.

Zweckmäßige Weiterbildungen der Erfindung sind in den Unteransprüchen angegeben.

Die Erfindung wird im folgenden anhand von neun Figuren erläutert.

Es zeigen

Fig. 1          den bereits erläuterten Reflexionsquerschnitt für ein Flugzeug,
Fig. 2          ein Blockschaltbild zur Verdeutlichung der "kohärenten Zusammenfassung der Abstandszellen,
Fig. 3          die Frequenzlage der Filter einer Filterbank einer 16 Punkte FFT,
Fig. 4          ein Schaltungsbeispiel eines "mehrfrequenten" Puls-Doppler-Radargeräts nach der Erfindung,
Fig. 5 bis 8    das Ansprechverhalten einer 16 Punkte FFT-Filterbank für unterschiedliche Abstände der Abstandszellen,
Fig. 9          ein synthetisches Ziel, das aus zwei auseinanderliegenden Punktzielen besteht.

In Fig. 2 ist ein Blockschaltbild dargestellt, anhand dessen die kohärente Zusammenfassung der einzelnen Abstandszellen eines Zieles erläutert wird. Es werden dabei n zeitlich aufeinanderfolgende Abstandszellen, wobei das Produkt aus n und der Abmessung einer Abstandszelle in Radialrichtung in etwa den Zielabmessungen angepaßt oder größer ist, einer Filterbankverarbeitung, wie z.B. FFT oder DFT, unterworfen. "Oversampling" zur Reduzierung der "range-gate-straddling"-Verluste wird im Folgenden nicht betrachtet, sollte bei einer Realisierung aber vorgesehen werden. Das empfangene Radarecho-Videosignal wird dabei zunächst einem Analog/Digital-Wandler 1 mit einer hohen Abtastrate von z.B. 100 MHz oder höher zugeführt. Das digitale Ausgangssignal (I-Q-Kanäle) wird dann dem Eingang eines Schieberegisters 3 der Länge n zugeführt. Die Stufenausgänge des Schieberegisters 3 sind mit den Eingängen einer DFT- oder FFT-Filterbank 2 verbunden, deren Ausgänge n-l "low-resolution"-Kanäle bilden. Die Wirkung dieser kohärenten Zusammenfassung wird im folgenden näher erläutert:

Die komplexe DFT bzw. FFT bewirkt eine lineare Phasenprogression für aufeinander folgende Abstandszellensignale und anschließende Summation der entsprechend phasenverschobenen Abstandszellensignale. Die Summation bewirkt eine Begrenzung der Bandbreite und die Phasenprogression eine Verschiebung der Mittenfrequenz. Für jeden Filterausgang wird eine andere Phasenprogression verwendet. Die aktuelle Phasenprogression bestimmt dabei die Abweichung von der Mittenfrequenz des breitbandigen Kanals.

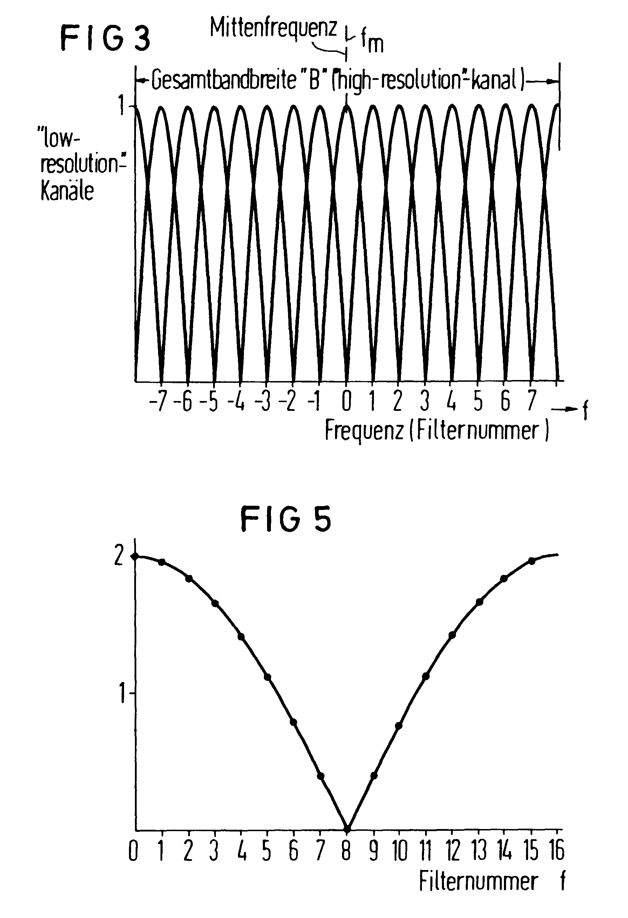

Um die Wirkungsweise zu verdeutlichen, sei als ein anhand der Fig. 3 beschriebenes Beispiel angenommen, daß man 16 aufeinanderfolgende Abstandszellensignale einer FFT unterzieht. Die 16 Ausgangswerte der FFT stellen die Ausgänge von 16 Filtern dar, welche eine Bandbreite von etwa einem 1/16 (abhängig von der Wichtung zur Reduktion der Nebenzipfel) der ursprünglichen durch den extrem kurzen Impuls gegebenen Bandbreite B darstellen. Nutzbar sind jedoch nur 15 Filterausgänge. Man hat damit effektiv 15 Radarempfänger, welche in der Frequenz äquidistant verteilt sind. Der 16. nicht nutzbare Kanal erstreckt sich auf die beiden frequenzmäßigen Randbereiche des hochauflösenden Radarempfängers. Die Gesamtbandbreite B betrifft den sogenannten "High-resolution"-Kanal, wogegen die 15 Filterausgänge (an der Frequenzachse f mit den Nummern - 7 über 0 bis + 7 aufgetragen) die sogenannten "low-resolution"-Kanäle ergeben. $f_m$ ist die Mittenfrequenz des Bandes B.

Die weitere Verarbeitung kann dann nach bekannten Standardverfahren erfolgen; dies sind zunächst Clutterbefreiung durch die Verarbeitung eines Pulspaketes und anschließende CFAR-verarbeitung. Da man quasi 15 Radargeräte simultan betreibt, ist eine Reihe neuer Verarbeitungsmöglichkeiten vorhanden: Verarbeitung aller Kanäle und zwar inkohärent und kummulativ, m aus n Verfahren nach verschiedenen Kriterien, Verarbeitung des oder der am wenigstens gestörten Kanäle, Auswahl des oder der Kanäle mit der maximalen Zielenergie und Blindgeschwindigkeitsfreiheit bei entsprechend großer Bandbreite des "high-resolution"-Kanals mit der Bandbreite B.

Die Art der Verarbeitung ist im allgemeinen der aktuellen Situation, wie natürliche oder künstliche Störungen, anzupassen; dies kann auch entfernungsselektiv und/oder sektorweise erfolgen.

Um die Leistungsverteilung auf die 15 Empfangskanäle besser zu verstehen, sei zunächst angenommen, daß es sich beim Ziel um ein Punktziel handelt, dessen Echo sich in einem Abstandszellensignal befindet. In allen 16 Abstandszellensignalen befinden sich unkorrelierte Rauschleistungen. Am Ausgang aller 16 Filter erhält man damit jeweils das, wenn auch phasenverschobene, Nutzsignal und jeweils die aus 16 unkorrelierten Rauschleistungen aufaddierte Summenrauschleistung. Das Signal/Rausch-verhältnis hat sich damit um den Faktor 16 verschlechtert. Dies ist der Ausdruck dafür, daß die Sendeenergie auf 16 "low-resolution"-Kanäle gleichmäßig aufgeteilt wurde. In dB's ausgedrückt, entspricht dies ca. 12 dB.

Abhängig davon, wieviele Abstandszellensignale einer FFT-Verarbeitung unterzogen werden, erhält man eine gleichmäßige Aufteilung der Leistung auf die einzelnen Empfangskanäle, abgesehen von dem Verlust durch einen nicht nutzbaren Kanal. Abhängig von der verarbeiteten Abstandszellenanzahl n ergibt sich bei der kohärenten Verarbeitung ein Verlust von l/n. Dieser Verlust ist theoretisch exakt, da die FFT-Analyse eine Analyse mit einem Satz orthogonaler Funktionen darstellt.

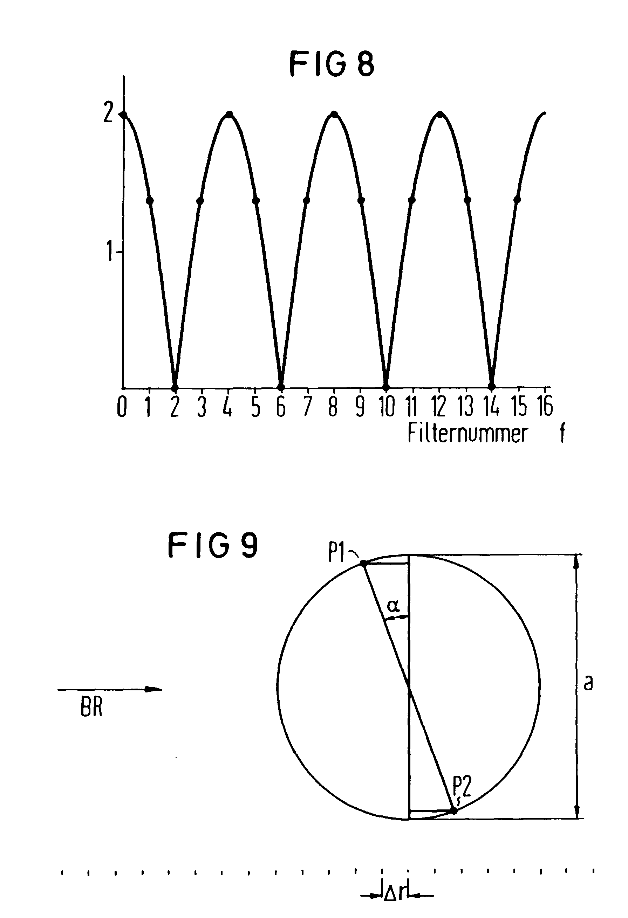

Als nächstes Beispiel wird ein synthetisches Ziel betrachtet, welches, wie in Fig. 9 dargestellt ist, aus zwei identischen Punktzielen P1 und P2 mit einem Abstand a besteht. Bei einem üblichen Radargerät erhält man, abhängig von der Phase der beiden Punktziele P1 und P2 und dem Aspektwinkel $\alpha$, unter dem dieses Ziel gesehen wird, ein Gesamtecho, welches zwischen totaler Auslöschung und der doppelten Größe (bezogen auf Spannungen) liegen kann. BR bezeichnet in Fig. 9 die Radarblickrichtung. Bei der erfindungsgemäßen Lösung mit hoher Entfernungsauflösung werden die Echos der beiden Punktziele P1 und P2 über einen größeren Bereich des Aspektwinkels $\alpha$ noch aufgelöst, d.h. sie fallen in zwei getrennte Abstandszellen. Lediglich über einen kleinen Bereich des Aspektwinkels $\alpha$ fallen diese Echos in eine gemeinsame Abstandszelle und können nicht mehr getrennt aufgelöst werden. Der Bereich des Aspektwinkels $\alpha$, in dem dies erfolgt, ist abhängig von dem Abstand a der beiden Punktziele und der Entfernungsauflösung $\Delta r$ des Radargerätes.

Dieser Bereich, innerhalb dessen die beiden Echos nicht aufgelöst werden, ergibt sich zu:

$$\alpha = \text{arc sin} \left[ \frac{\Delta r}{2a} \right] . \qquad (1)$$

Der Bereich des Aspektwinkels $\alpha$, unter dem die beiden Echos nicht aufgelöst werden können, wird umso kleiner, je besser die Entfernungsauflösung $\Delta r$ ist und je größer der Abstand a ist.

Fallen die beiden Echos jedoch in zwei getrennte Abstandszellen, dann werden bei der erfindungsgemäßen Lösung die beiden Echos an den verschiedenen Filiterausgängen mit unterschiedlichen Phasendifferenzen (und zwar den Vielfachen von 360°/16 = 22.5°) aufaddiert. Das Ansprechen der Filter entspricht damit einer Cosinusfunktion, welche an 16 diskreten, äquidistanten Stellen abgetastet wird.

Man erhält damit an einem oder mehreren Ausgängen zwar eine vollständige oder fast vollständige Auslöschung. Andererseits ergeben sich aber auch phasenrichtige oder annähernd phasenrichtige Additionen der beiden Einzelechos mit der entsprechenden Verstärkung. Es sprechen damit mehrere Kanäle mit einem Gewinn von 6 dB bzw. annähernd 6 dB an.

Als mittleren leistungsmäßigen Gewinn über alle Kanäle sieht man ein derartiges Ziel als Integral über das Quadrat einer Cosinusfunktion, mit welcher die Filter ansprechen. D.h. über alle Filter gemittelt ergibt sich ein theoretischer Gewinn von 2, abzüglich des Verlustes von l/n durch ein nicht nutzbares Filter.

$$\text{Gesamtgewinn} = 2 \cdot (1 - 1/n) \cdot \qquad (2)$$

Dies gilt streng nur für n >> 1.

Dieses theoretische Ziel, welches bei einem üblichen Radargerät ein fluktuierendes Ziel darstellt, wird mit der erfindungsgemäßen Lösung quasi als nicht fluktuierendes Ziel angesehen, wobei sich die Leistungen der beiden Echos praktisch aufaddieren. Dies gilt für alle Aspektwinkel, abgesehen von dem in der Gleichung (1) beschriebenen Bereich und der Annahme, daß

$$a \leq n \cdot \Delta r \qquad (3)$$

ist.

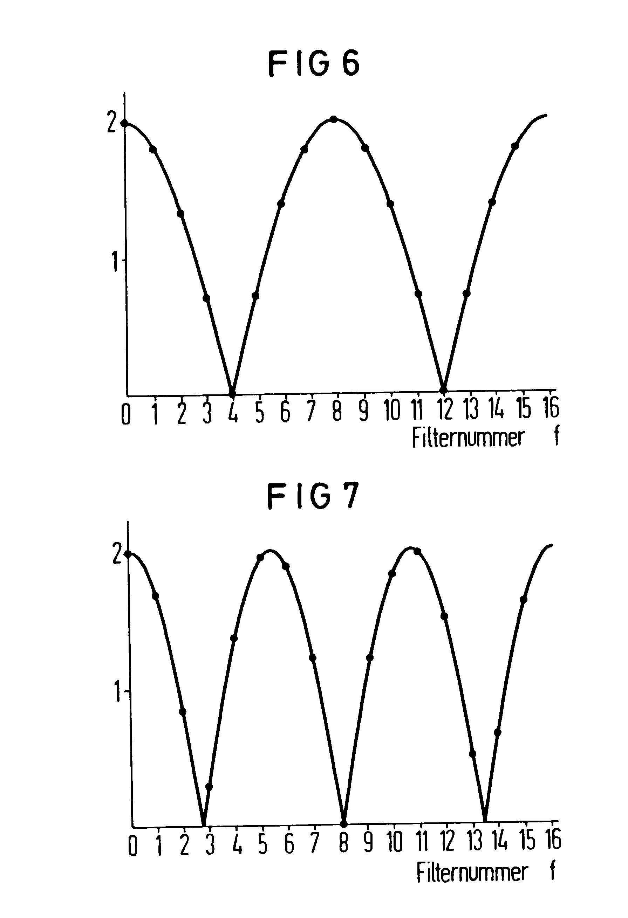

In den Fig. 5 bis 8 ist für unterschiedliche Abstände der Abstandszellen, in welche die Echos der beiden Punktziele fallen, das Ansprechen der Filter dargestellt. Die dargestellte Cosinus-Funktion ergibt sich bei einer Phasendifferenz von 0° zwischen den beiden Echos. Für andere Phasendifferenzen zwischen den Echos ergibt sich eine entsprechend horizontale Verschiebung der Cosinus-Funktion. In den Fig. 5 bis 8 ist das Ansprechen der Filter für unterschiedliche Abstände der Abstandszellen der Echos dargestellt. In Fig. 5 beträgt der angenommene Punktzielabstand a, in Fig. 6 2a, in Fig. 7 3a und in Fig. 8 4a, wobei stets eine 16 Punkte-FFT-Filterbank zugrunde gelegt wird. An der Frequenzachse f sind die Filternummern aufgetragen.

Probleme können sich lediglich durch die diskrete Abtastung der Cosinusfunktion bei großen Abständen der Abstandszellen der beiden Punktziele ergeben. Dann können im Extremfall alle Filter Nullstellen der Cosinusfunktion abtasten. Dies ließe sich durch eine DFT-Verarbeitung vermeiden, welche mehr Filter verarbeitet, z.B. 32 Filter aus 16 Abstandszellen bildet.

Bei realen Zielen mit vielen Streuzentren wirkt dieses Verfahren ähnlich, als ob man 15 gleichmäßig in der Frequenz verteilte Radargeräte simultan an einer Antenne betreibt. Dies ergibt damit die gewünschte Zieldekorrelation gegen Zielfluktuationen. Weitere Vorteile sind Dekorrelation von Multipath, Glint und Seaclutter. Das Verfahren eignet sich damit nicht nur für Such-Radargeräte, sondern für alle Arten von Radargeräten, wie z.B. Feuerleitradargeräte, Multifunktionsradargeräte.

Ein mögliches Realisierungsbeispiel eines derartigen Radargerätes ist in Fig. 4 mit den wesentlichen Komponenten dargestellt.

An eine gemeinsame Antenne 4 sind über einen Duplexer 5 ein Radarsender 6 und ein Radarempfänger 7 angeschlossen. Zur Vermeidung des Duplexers 5 können auch der Sender 6 und der Empfänger 7 an getrennte Antennen angeschlossen werden. Um eine entsprechend hohe Energie in dem kurzen Sendeimpuls unterbringen zu können, wird im Normalfall eine Pulsexpansion im Sender und eine Pulskompression im Empfänger erforderlich. Der Empfänger 7 ist an die Bandbreite des expandierten Pulses angepaßt. Die Pulskompression kann im Empfänger in einem analoger Pulskompressor 8 vor einem A/D-Wandler 9 erfolgen oder in einem digitalen Pulskompressor 10 hinter dem A/D-Wandler 9.

Zur Verfügung steht dann der Kanal 11 (I-Q-Kanäle) mit der hohen Auflösung ("High-resolution-Kanal), welcher sich in einem Nebenzweig 15 zur Clutterkarten-Verarbeitung bzw. clutteradaptiven Dopplerverarbeitung für langsame Ziele anbietet und dessen Problematik für schnelle Ziele in dem genannten Beitrag von Farina et al bereits beschrieben ist.

Aus dem Kanal 11 mit der hohen Auflösung werden über ein Schieberegister 12 n zeitlich aufeinanderfolgende Abstandszellensignale einer Filterbank-Verarbeitung unterzogen. Die n-1 Ausgänge der Filterbank 13 sind die beschriebenen "low-resolution"-Kanäle 14.

Als ein Zahlenbeispiel kann die Abtastrate des A/D-Wandlers 9 mit 100 MHz gewählt werden. Es fallen dann im hochauflösenden Kanal 11 alle 10 nsec Samples an. In der komplexen Filterbankverarbeitung 13 ist eine 50 % ige Überlappung eine typische Lösung. D.h. es fallen alle 80 nsec die Werte der 15 "low-resolution"-Empfangskanäle 14 an. Die Entfernungsauflösung im "high-resolution"-Kanal 11 beträgt bei dem Zahlenbeispiel 1,5 m, in den "low-resolution"-Kanälen 14 24 m und ist damit an typische Flugziele angepaßt.

Die weitere Verarbeitung, wie Clutterkartenverarbeitung und clutteradaptive Doppler-Verarbeitung (für langsame Ziele) und die Verarbeitung gegen Volumenclutter und Chaff im "high-resolution"-Kanal 11 sowie die Clutterbefreiung und CFAR-Schaltungen für die "low-resolution"-Kanäle 14 ist nicht dargestellt.

Für den Fall, daß keine absichtlichen Störungen vorliegen und eine Verarbeitung aller "low-resolution"-Kanäle 14 bzw. eine m aus n Verarbeitung durchgeführt wird, ergibt sich ein annähernd rechteckiges Diagramm für die Abhängigkeit der Entdeckungswahrscheinlichkeit mit der Entfernung für die "single scan detection probability". Dies gilt für eine inkohärente oder kumulative Verarbeitung der "low-resolution"-Kanäle 14. Diese Annäherung an ein Rechteck wird umso besser, je mehr Kanäle verarbeitet werden.

Die erforderliche hohe Verarbeitungsleistung eines derartigen Radargerätes (z.B. ein Kanal mit 10 nsec Entfernungs-Tor-Takt und 15 Kanäle mit 80 nsec Entfernungs-Tor-Takt) ist bei der absehbaren Entwicklung der Halbleitertechnik (kleinere Strukturen, höhere Geschwindigkeit und höhere Integrationsdichte) spätestens in einigen Jahren bei relativ niedrigen Kosten möglich.

Als eine Weiterbildung des erfindungsgemäßen Prinzips können mehrere Filterbänke vorgesehen werden. Diese Filterbänke verarbeiten dann jeweils eine unterschiedliche Anzahl von Abstandszellensignalen. Diese Maßnahme erlaubt einerseits die Anpassung an unterschiedliche Zielgrößen. Andererseits kann diese Lösung als ECCM-Maßnahme z.B. zur Einengung der Bandbreite der "low-resolution"-Kanäle verwendet werden. Dieser Lösungsvorschlag ist auch mit einer umschaltbaren Filterbank, welche unterschiedlich viele Abstandszellensignale verarbeiten kann, lösbar.

Eine weitere Fortführung des Prinzips nach der Erfindung ist der Einsatz einer Array-Verarbeitung, ähnlich dem Interferometer-Prinzip, so wie es in der DE-OS 3 740 142 beschrieben ist. Dabei wird ein vertikales Array aus einer Sendeantenne und mehreren Empfangsantennen eingesetzt. Eine derartige Lösung erlaubt die Elevationsbestimmung von Zielen bis hin zur Vermessung der Elevation der einzelnen Streuzentren eines Zieles. Darüber hinaus ist die Unterdrückung von Mehrwegeausbreitungen möglich.

Erweitert man die Array-Verarbeitung auch auf die horizontale Richtung, dann ist zusätzlich eine azimutale Vermessung der Streuzentren der Ziele möglich. Die hohe Auflösung in der Entfernung ergibt eine entsprechende Auflösung der Streuzentren in radialer Richtung. Man ist dann in der Lage, die Streuzentren eines Zieles dreidimensional zu vermessen und darauf eine Klassifikation der Ziele aufzubauen.

Geeignete Pulsexpansions- und Pulskompressionsverfahren erlauben die Erzielung eines LPI-Verhaltens ("low probability of intercept" = geringe Abhörwahrscheinlichkeit). Dieses Verhalten wird besonders ausgeprägt bei einer Fortführung des vorgeschlagenen Prinzips auf bi- oder multistatische Systeme.

**Patentansprüche**

1. Pulsdoppler-Radargerät, dessen Sender Kurzzeitimpulse abstrahlt, so daß ein Zielsignal auf der Empfangsseite in einzelne Abstandszellensignale aufgelöst werden kann,

   **dadurch gekennzeichnet**,

   daß die empfangsseitige Zielsignalaufteilung in Abstandszellensignale im Anschluß an eine Signalumwandlung in einem schnellen Analog/Digital-Wandler (1) erfolgt, daß dazu die einzelnen Abstandszellensignale des Zieles kohärent zusammengefaßt werden und zwar in der Weise, daß n zeitlich aufeinanderfolgende Abstandszellensignale einer Verarbeitung in einer n Eingänge aufweisenden Filterbank (2) unterworfen werden, wobei das Produkt der Abstandszellenanzahl n und der Abmessung einer Abstandszelle in Radialrichtung in etwa den Zielabmessungen angepaßt oder größer ist, und daß die Verarbeitung in der Filterbank eine lineare Phasenprogression für aufeinanderfolgende Abstandszellensignale mit anschließender Summation der entsprechend phasenverschobenen Komponenten unter Verwendung einer anderen Phasenprogression für jeden Filterausgang umfaßt.

2. Radargerät nach Anspruch 1,
   **dadurch gekennzeichnet**,
   daß als Filterbank (2) eine Einrichtung zur diskreten Fourier-Transformation (DFT) oder eine Einrichtung zur Fast Fourier-Transformation (FFT) vorgesehen ist.

3. Radargerät nach Anspruch 1 oder 2,
   **dadurch gekennzeichnet**,
   daß im Anschluß an die kohärente Zusammenfassung eine Clutterbefreiung und anschließend daran eine CFAR-Verarbeitung (Constant-False-Alarm-Rate) vorgenommen wird.

4. Radargerät nach einem der vorhergehenden Ansprüche,
   **dadurch gekennzeichnet**, daß die n aufeinanderfolgenden Abstandszellensignale den n Eingängen der Filterbank (2) über die n Ausgänge eines Schieberegisters (3) mit der Länge n zugeführt werden, dem an seinem Eingang das im Analog/Digital-Wandler (1) umgewandelte Zielsignal eingegeben wird.

5. Radargerät nach einem der vorhergehenden Ansprüche,
   **dadurch gekennzeichnet**,
   daß auf der Sendeseite eine Pulsexpansion und auf der Empfangsseite eine Pulskompression vorgesehen ist.

EP 0 487 940 B1

**6.** Radargerät nach Anspruch 5,
**dadurch gekennzeichnet**,
daß vor dem Analog/Digital-Wandler (1) eine analoge Pulskompression oder nach dem Analog/Digital-Wandler in I/Q-Kanälen eine digitale Pulskompression erfolgt.

**7.** Radargerät nach einem der vorhergehenden Ansprüche,
**dadurch gekennzeichnet**,
daß vor der Filterbankverarbeitung ein Signalweg (15) abgezweigt wird, in dem eine Clutterkarten-Verarbeitung und/oder eine clutteradaptive Dopplerverarbeitung für langsame Ziele erfolgt.

**8.** Radargerät nach einem der vorhergehenden Ansprüche,
**dadurch gekennzeichnet**,
daß anstelle einer einzigen Filterbank parallel zueinander mehrere Filterbänke vorgesehen sind, die eine unterschiedliche Anzahl von Abstandszellensignalen verarbeiten.

**9.** Radargerät nach einem Ansprüche 1 bis 7,
**dadurch gekennzeichnet**,
daß die Filterbank umschaltbar ausgebildet ist, derart, daß unterschiedlich viele Abstandszellensignale verarbeitbar sind.

**10.** Radargerät nach einem der vorhergehenden Ansprüche,
**dadurch gekennzeichnet**,
daß eine vertikale Antennenkombination, bestehend aus einer Sendeantenne und mehreren Empfangsantennen, vorgesehen ist, so daß bei Betrieb der Empfangsantennen auf der Empfangsseite eine Elevationsbestimmung von Zielen bis hin zur Vermessung der Elevation einzelner Streuzentren in den Abstandszellen eines Zieles möglich ist.

**11.** Radargerät nach Anspruch 10,
**gekennzeichnet durch**
eine Erweiterung der Antennenkombination auf die horizontale Richtung, so daß auch eine azimutale Vermessung von Streuzentren möglich ist.

**12.** Radargerät nach einem der vorhergehenden Ansprüche,
**gekennzeichnet durch**
die Verwendung in bi- oder multistatischen Radarsystemen.

**Claims**

**1.** Pulse-Doppler radar equipment whose transmitter emits short pulses so that a target signal on the receiving side can be resolved into individual range cell signals, characterized in that the target signal breakdown on the receiving side into range cell signals is carried out following signal conversion in a fast analogue/digital converter (1), in that the individual range cell signals of the target are for this purpose combined in a coherent manner, to be precise in such a manner that n successive range cell signals in time are subjected to processing in a filter bank (2) having n inputs, the product of the number n of the range cells and the size of a range cell in the radial direction being roughly matched to or greater than the target dimensions, and in that the processing in the filter bank comprises a linear phase progression for successive range cell signals, with subsequent summation of the correspondingly phase-shifted components using a different phase progression for each filter output.

**2.** Radar equipment according to Claim 1, characterized in that a device for discrete Fourier transformation (DFT) or a device for fast Fourier transformation (FFT) is provided as the filter bank (2).

**3.** Radar equipment according to Claim 1 or 2, characterized in that the coherent combination is followed by clutter removal, and this is then followed by CFAR processing (constant false alarm rate).

**4.** Radar equipment according to one of the preceding claims, characterized in that the n successive range cell signals are fed to the n inputs of the filter bank (2) via the n outputs of a shift register (3) of length n, to whose input the target signal, which has been converted in the analogue/digital converter (1), is input.

7

5. Radar equipment according to one of the preceding claims, characterized in that pulse expansion is provided on the transmitting side and pulse compression is provided on the receiving side.

6. Radar equipment according to Claim 5, characterized in that analogue pulse compression is carried out before the analogue/digital converter (1), or digital pulse compression is carried out in I/Q channels after the analogue/ digital converter.

7. Radar equipment according to one of the preceding claims, characterized in that a signal path (15) is tapped off before the filter bank processing, in which signal path (15) clutter-card processing and/or clutter-adaptive Doppler processing are/is carried out for slow targets.

8. Radar equipment according to one of the preceding claims, characterized in that a plurality of filter banks are provided in parallel with one another instead of a single filter bank, which filter banks process a different number of range cell signals.

9. Radar equipment according to one of Claims 1 to 7, characterized in that the filter bank is designed to be switchable in such a manner that a different number of range cell signals can be processed.

10. Radar equipment according to one of the preceding claims, characterized in that a vertical antenna combination, comprising one transmitting antenna and a plurality of receiving antennas, is provided so that, during operation of the receiving antennas, it is possible to determine the elevation of targets on the receiving side, to the extent of measuring the elevation of individual scatter centres in the range cells of a target.

11. Radar equipment according to Claim 10, characterized by an extension of the antenna combination to the horizontal direction, so that azimuth measurement of scatter centres is also possible.

12. Radar equipment according to one of the preceding claims, characterized by use in bistatic or multistatic radar systems.

**Revendications**

1. Appareil radar Doppler à impulsions, dont l'émetteur émet des impulsions de brève durée de sorte qu'un signal de cible peut être subdivisé, sur le côté réception, en des signaux individuels de cellules de distances, caractérisé en ce
que la subdivision, effectuée côté réception, du signal de cible en des signaux de cellules de distances s'effectue à la suite d'une conversion du signal dans un convertisseur analogique/numérique rapide (1), qu'à cet effet les différents signaux de cellules de distances de la cible sont réunis de façon cohérente et ce de telle sorte que n signaux de cellules de distances, qui se succèdent dans le temps, sont soumis à un traitement dans un bloc de filtres (2) comportant n entrées, le produit du nombre n de cellules de distances par la dimension d'une cellule de distance dans la direction radiale étant approximativement adapté ou supérieur aux dimensions de la cible, et que le traitement dans le bloc de filtres comprend une progression de phase linéaire pour des signaux successifs de cellules de distances avec sommation ultérieure des composantes déphasées de façon correspondante, moyennant l'utilisation d'une autre progression de phase pour chaque sortie du filtre.

2. Appareil radar selon la revendication 1, caractérisé en ce qu'il est prévu, comme bloc de filtres (2), un dispositif servant à exécuter une transformation de Fourier discrète (DFT) ou un dispositif servant à exécuter une transformation de Fourier rapide (FFT).

3. Appareil radar selon l'une des revendications 1 ou 2, caractérisé en ce qu'une suppression des échos fixes est exécutée après la réunion cohérente et qu'ensuite un traitement CAR (Constant-False-Alarm -Rate, c'est-à-dire avec un taux constant de fausses alarmes) est exécuté.

4. Appareil radar selon l'une quelconque des revendications précédentes, caractérisé en ce que les n signaux successifs de cellules de distances sont envoyés aux n entrées du bloc de filtres (2) par l'intermédiaire des n sorties d'un registre à décalage (3) de longueur n, à l'entrée duquel est envoyé le signal de cible, qui est converti dans le convertisseur analogique/numérique (1).

5. Appareil radar selon l'une quelconque des revendications précédentes, caractérisé en ce qu'une dilatation des impulsions est prévue sur le côté émission et qu'une compression des impulsions est prévue sur le côté réception.

6. Appareil radar selon l'une quelconque des revendications 5, caractérisé en ce qu'une compression analogique des impulsions est exécutée en amont du convertisseur analogique/numérique (1) ou qu'une compression numérique d'impulsions est exécutée en aval du convertisseur analogique/numérique dans des canaux I/Q.

7. Appareil radar selon l'une quelconque des revendications précédentes, caractérisé en ce qu'en amont du traitement exécuté dans le bloc de filtres, s'étend en dérivation une voie (15) de transmission du signal, dans laquelle est exécuté un traitement de cartes d'échos fixes et/ou un traitement Doppler, adaptatif vis-à-vis des échos fixes, pour des cibles lentes.

8. Appareil radar selon l'une quelconque des revendications précédentes, caractérisé en ce qu'à la place d'un seul bloc de filtres sont prévus plusieurs blocs de filtres parallèles, qui traitent des nombres différents de signaux de cellules de distances.

9. Appareil radar selon l'une des revendications 1 à 7, caractérisé en ce que le bloc de filtres est agencé de manière à être commutable de telle sorte que l'on peut traiter des nombres différents de signaux de cellules de distances.

10. Appareil radar selon l'une des revendications précédentes, caractérisé en ce qu'il est prévu une combinaison verticale d'antennes, constituée par une antenne émettrice et plusieurs antennes réceptrices, de sorte que lors du fonctionnement des antennes réceptrices sur le côté réception, une détermination de l'élévation de cibles est possible jusqu'à la mesure de l'élévation de centres isolés de diffusion dans les cellules de distances d'une cible.

11. Appareil radar selon la revendication 10, caractérisé par une extension de la combinaison d'antennes dans la direction horizontale de sorte qu'une mesure azimutale de centres de diffusion est également possible.

12. Appareil radar selon l'une des revendications précédentes, caractérisé par son utilisation dans des systèmes radars bistatiques ou multistatiques.

# FIG 1

# FIG 2

n-1 "low-resolution"-Kanäle

**FIG 4**

Zur Clutterkartenauswertung und
clutteradaptiven Doppler-
Auswertung 15

12 Schieberegister, Länge n

Filterbank
(DFT oder FFT)
13 Komplex

14 n-1 "low-resolution"-
Kanäle
Zur Clutterbefreiung und
CFAR-Schaltungen 11

Antenne 4
5 Du-plexer
Em-pfänger 7
PK analog 8
A/D I,Q 9
PK digial 10

100 MHz

Sender 6

FIG 3

Mittenfrequenz $f_m$

Gesamtbandbreite "B" (high-resolution"-kanal)

"low-resolution"-Kanäle

1

-7 -6 -5 -4 -3 -2 -1 0 1 2 3 4 5 6 7 → f

Frequenz (Filternummer)

FIG 5

2

1

0 1 2 3 4 5 6 7 8 9 10 11 12 13 14 15 16

Filternummer f

# F I G 6

Filternummer    f

# F I G 7

Filternummer    f

13

## FIG 8

Filternummer    f

## FIG 9